Europäisches Patentamt

European Patent Office

Office européen des brevets

(19)

(11) EP 1 309 172 A2

(12) EUROPEAN PATENT APPLICATION

(43) Date of publication:
07.05.2003 Bulletin 2003/19

(51) Int Cl.$^7$: H04N 1/40, H04N 1/52

(21) Application number: 02257416.4

(22) Date of filing: 25.10.2002

(84) Designated Contracting States:
AT BE BG CH CY CZ DE DK EE ES FI FR GB GR
IE IT LI LU MC NL PT SE SK TR
Designated Extension States:
AL LT LV MK RO SI

(30) Priority: 30.10.2001 US 20676

(71) Applicant: Xerox Corporation
Rochester, New York 14644 (US)

(72) Inventors:
• Wang, Shen-ge
  Fairport, NY 14450 (US)
• Fan, Zhigang
  Webster, NY 14580 (US)

(74) Representative: Skone James, Robert Edmund
GILL JENNINGS & EVERY
Broadgate House
7 Eldon Street
London EC2M 7LH (GB)

(54) **Method of constructing a halftone screen**

(57)     A method of constructing a halftone screen includes selecting (100) a frequency and screen angle of interest. A subcell having spatial vectors which satisfy the selected frequency and screen angle of interest is identified (110). A supercell comprising an array of the subcells is formed (170). An integer relationship potentially having numerous solutions exists between the supercell and the subcell. The integer relationship is solved for values of the integers and then tested against the values for the subcell spatial vectors. Although the solution may in some cases be the null set, in many cases there will be numerous solutions. Each resulting solution, if any, is then tested according to any additional constraints or tolerances specified for the particular halftone screen. If any of the resulting supercell solutions satisfies the tests, that supercell may be used to create a halftone screen.

FIG. 5

**Description**

This invention relates to color printing, and more particularly, to a process for designing optimized halftone screens.

Halftoning or screening is the reproduction of grayscale images using dots of a single shade but varying size to simulate the different shades of gray. The pattern of dots in a halftone screen may be coarse or fine. The frequency of a screen is usually known as its screen ruling and is generally defined in "lines per inch (lpi)". A screen ruling of "60 lpi" means that sixty dots lie along a linear inch, measured along the axis which brings the dots closest together, its screen angle. When a digital marking engine is used to produce a screen pattern, the available grid of machine pixels is divided into tiles called "halftone cells", each of which cell contains a number of machine pixels. A pattern of halftone dots is created by getting the marking engine to mark some of the machine pixels within each halftone cell, leaving others unmarked.

Each halftone cell is typically a two dimensional array of predetermined threshold levels. The halftone cells are spatially replicated and tiled to form a halftone screen. Halftone screening compares the required continuous color tone level of each pixel for each color separation with one of the predetermined threshold levels. If the required color tone level is darker than the threshold halftone level, a color spot is printed at the specified pixel. Otherwise the color spot is not printed. Typically, the shape and tiling geometry of the halftone cell is a square, rectangle, parallelogram, line, or the like.

Because of the constraints of the machine pixel grid, not all arbitrary rotations of halftone screens can be implemented digitally. There are many methods of generating rotated halftone screens. In the rational tangent method, each halftone cell is exactly the same size and shape as its neighbors and contains the same number of machine pixels. However, there are relatively few combinations of screen angles and frequency that work and the quantization errors of angle and frequency can be quite large.

It is important to have a large number of possible screen angles to select from in full color printing using overlaid halftone screens for each of the cyan, magenta, yellow and black separations. In addition to quantization errors, in two, three and four color printing visible moiré may result from the interference between overlapping dot patterns. Also, different types of images frequently require different types of halftone screens.

Since a particular halftone screen may not work for all image types in a particular output job, much effort has gone into the design of optimized halftone screens. For example, various digital halftone screens having different shapes and angles are described in "An Optimum Algorithm for Halftone Generation for Displays and Hard Copies," by T. M. Holladay, Proc. Soc. for Information Display, 21, p. 185 (1980).

Supercells have been used to increase the angular accuracy of the halftone screen and to reduce the number of tone levels that the screen can produce. A supercell is generally an array of halftone cells, however not all of the individual halftone cells in the supercell need be the same size or shape. The supercell fits over the machine pixel grid using the rational tangent method.

Halftone screens formed of supercells offer designers a greater number of screen angles from which to choose for finding a particular optimized solution. However, searching for supercells can be time consuming and current techniques are limited to searching orthogonal-shape supercells, therefore, do not provide a complete set of solutions. It is desirable to have more design techniques which provide an even greater number of screen angles. It is desirable to have a technique for finding supercells which can be in general parallelogram shape.

In accordance with the present invention, a method of constructing a halftone screen comprises:

defining a halftone screen frequency and screen angle according to a predetermined requirement;
defining a desired subcell having the predetermined frequency and screen angle requirement, wherein the subcell is substantially specified by two spatial vectors $\mathbf{v}_1 = (x_1, y_1)$ and $\mathbf{v}_2 = (x_2, y_2)$, wherein $x_1$, $x_2$, $y_1$, and $y_2$ are real numbers;
forming a supercell comprising an array of the subcells, wherein the supercell is substantially specified by two spatial vectors $\mathbf{u}_1$ and $\mathbf{u}_2$ and wherein the relationship between the supercell and the subcell satisfies:

$$k_1 v_1 + k_2 v_2 = u_1,$$

and

$$k_3 v_1 + k_4 v_2 = u_2,$$

where $k_1$, $k_2$, $k_3$ and $k_4$ are integer values.

Halftone screens formed of non-orthogonal supercells, where both the supercell and the subcells are defined by arbitrary spatial vectors, provide the halftone designer with a new source of optimized halftone screens. A method of constructing a halftone screen includes selecting a frequency and screen angle of interest. A subcell having spatial vectors which satisfy the selected frequency and screen angle of interest is identified. A supercell comprising an array of the subcells is formed. An integer relationship potentially having numerous solutions exists between the supercell and the subcells. The integer relationship is solved for values of the integers and then tested against the values for the subcell spatial vectors. Although the solution may in some cases be the null set, in many cases there will be numerous solutions. Each resulting solution, if any, is then tested according to any additional constraints or tolerances specified for the particular halftone screen. If any of the resulting supercell solutions satisfies the tests, that supercell may be used to create a halftone screen.

Supercells may be generated for any desired frequency and screen angle constraints and for any other constraints that can be translated into a set of spatial vectors. If the desired constraints pertain to moiré-free color halftoning, for example, the number of solutions using non-orthogonal supercells is frequently an order of magnitude greater than the number of solutions using orthogonal supercells.

DESCRIPTION OF THE DRAWINGS

Figure 1 is two-dimensional spatial vector representation of a single-cell halftone cell;
Figure 2 is a frequency vector representation of the halftone cell of Figure 1;
Figure 3 is a two-dimensional spatial representation of a supercell halftone screen;
Figure 4 is a two-dimensional spatial representation of two tiled supercell halftone screens;
Figures 5 is a flow chart outlining one exemplary embodiment of a method for constructing a supercell halftone screen;
Figure 6 is flow chart outlining a method of halftoning and rendering a color image; and
Figure 7 is a block diagram of an image processor operative to perform the method of Figure 6.

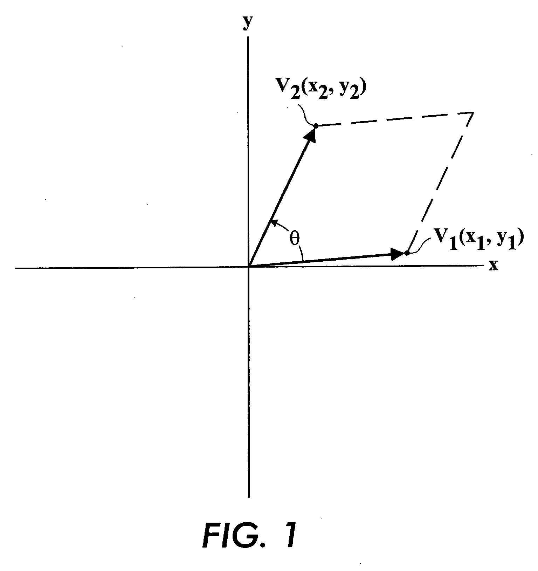

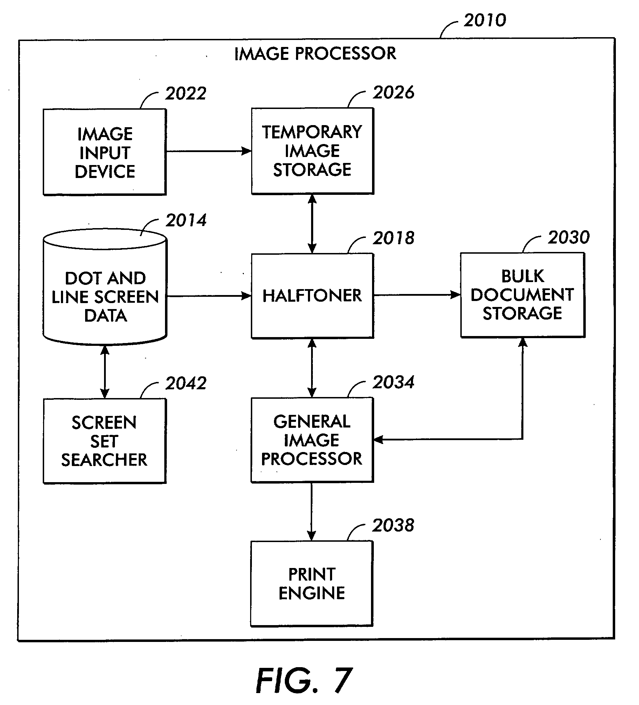

As shown in Figure 1, a single-cell halftone screen can be an arbitrarily shaped parallelogram, which can be represented in the spatial domain by two vectors, $\mathbf{V_1} = (x_1, y_1)$ and $\mathbf{V_2} = (x_2, y_2)$. In other words, the two spatial vectors $\mathbf{V_1}$ and $\mathbf{V_2}$ are specified by spatial coordinate values $x_1$, $y_1$, $x_2$ and $y_2$. If the given single-cell halftone screen represented by the graph shown in Figure 1 is used by a halftone screening system, such as that shown in Figure 7, the output will appear as a two-dimensional repeated or tiled pattern.

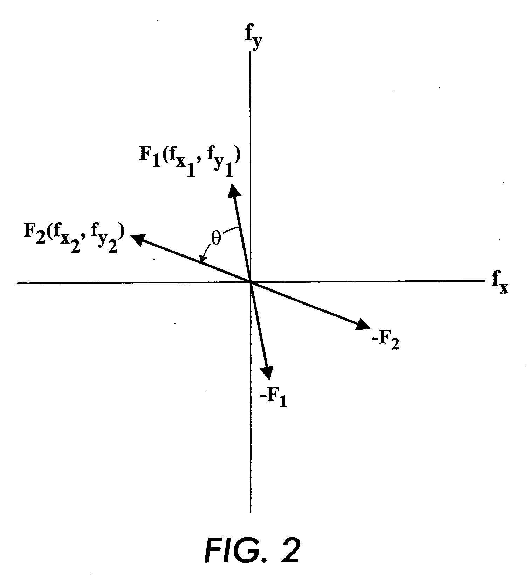

It should be appreciated that, by using Fourier analysis, a two-dimensional repeated pattern can be represented in the frequency domain by two frequency vectors, $\mathbf{F_1} = (f_{X1}, f_{Y1})$ and $\mathbf{F_2} = (f_{X2}, f_{Y2})$. Figure 2 illustrates, for example, the two frequency vectors, $F_1$ and $F_2$, corresponding to the Fourier transforms of the two spatial vectors, $\mathbf{V_1}$ and $\mathbf{V_2}$, respectively. It should also be appreciated that the two frequency vectors $\mathbf{F_1}$ and $\mathbf{F_2}$ are perpendicular to the two spatial vectors $\mathbf{V_1}$ and $\mathbf{V_2}$, respectively, and that their vector lengths are given by:

$$|F_1| = \frac{1}{|V_2 \sin\theta|}, \text{ and} \qquad (1a)$$

$$|F_2| = \frac{1}{|V_1 \sin\theta|} ; \qquad (1b)$$

where $\theta$ represents the angle between the vectors $\mathbf{V_1}$ and $\mathbf{V_2}$, which is also equal to the angle between the frequency vectors $\mathbf{F_1}$ and $\mathbf{F_2}$. In general, the moduli $|\mathbf{F_1}|$ and $|\mathbf{F_2}|$ are real numbers.

Also, the area A of the parallelogram encompassed by $\mathbf{V_2}$ and $\mathbf{V_1}$ can be represented as:

$$A = |V_1 V_2 \sin\theta| \qquad (2a)$$

Alternately, the area A of the parallelogram can be written as a function of the spatial coordinates $x_1$, $y_1$, $x_2$ and $y_2$; i.e., as:

$$A = |x_1 y_2 - x_2 y_1| \tag{2b}$$

Correspondingly, using Eqs. (2a) and (2b), Eqs. (1a) and (1b can be recast as:

$$|F_1| = \frac{|V_1|}{A}, \text{ and} \tag{3a}$$

$$|F_2| = \frac{|V_2|}{A}. \tag{3b}$$

The vectors $\mathbf{F_1}$ and $\mathbf{F_2}$ can be decomposed into their scalar components as:

$$f_{x_1} = \frac{-y_1}{A}, \tag{4a}$$

$$f_{y_1} = \frac{x_1}{A}, \tag{4b}$$

$$f_{x_2} = \frac{-y_2}{A}, \text{ and} \tag{4c}$$

$$f_{y_2} = \frac{x_2}{A}. \tag{4d}$$

Substitute $x_1$, $y_1$, $x_2$ and $y_2$ in Eq. (2b) by Eqs. (4a) - (4d), the area A of the parallelogram can be also written in terms of frequency components, i.e.,

$$A = \frac{1}{|f_{x1}f_{y2} - f_{x2}f_{y1}|} \tag{4e}$$

Therefore, Eqs. (4a) - (4d) express the frequency-to-spatial-component relationship for a cell defined by the spatial vectors $\mathbf{V_1}$ and $\mathbf{V_2}$. The frequency components, $f_{x1}$, $f_{y1}$, $f_{x2}$, and $f_{y2}$, can be completely defined by the four coordinate values, $x_1$, $y_1$, $x_2$ and $y_2$, and vice versa. Since Eqs. (4a) - (4d) describe a corresponding "mapping" of the frequency components to the spatial components, it should be appreciated that any analysis of the desired conditions in the frequency domain can be easily translated into a spatial domain specification. It should be appreciated that, while the above equations are developed in relation to a non-orthogonal single-cell halftone cell having a parallelogram-like shape, it is considered that orthogonal parallelograms, for example, squares, rectangles, etc, are special cases of general non-orthogonal parallelograms and above equations are certainly suitable to describe orthogonal parallelogram shaped cells.

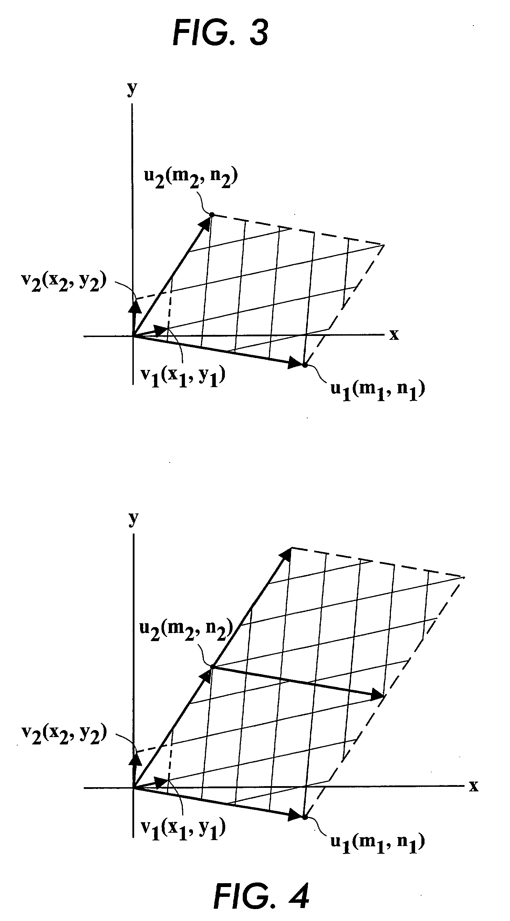

Referring to Figures 3 and 4, a supercell is defined by two arbitrary spatial vectors $\mathbf{u_1}$ = ($m_1$, $n_1$) and $\mathbf{u_2}$ = ($m_2$, $n_2$) that form a parallelogram, where $m_1$, $n_1$, $m_2$ and $n_2$ are integers. The supercell is an array of subcells, which are defined by two vectors $\mathbf{v_1}$ = ($x_1$, $y_1$) and $\mathbf{v_2}$ = ($x_2$, $y_2$) that form the parallelogram where $x_1$, $y_1$, $x_2$ and $y_2$ are real numbers. A method described herein finds all possible supercell parallelograms that have the property that when the supercell parallelogram is tiled, the subcell can also be tiled. Figure **4** shows two supercells defined by vectors $\mathbf{u_1}$ and $\mathbf{u_2}$ which are tiled.

Both the supercell and the subcell are generally represented by parallelograms. It should be noted, however, that both the supercell and the subcell can be any arbitrarily shaped polygon that is capable of being tiled in a periodic array. The arbitrarily shaped subcell can be fitted within the parallelogram.

A method of constructing non-orthogonal supercells includes selecting a subcell based on a desired frequency and screen angle and then finding all the supercells that can be formed using the desired subcell. Finding all supercell solutions includes searching a generalized relationship between the supercell and subcell for integer solutions. Once a series of integer solutions are determined, the solutions are tested against the original requirements and any other specified constraints. Supercells can be designed for any desired properties that can be transformed into spatial vector relationship, including moiré-free conditions. The methods described herein may be used in combination with the methods described in co-pending, co-assigned U.S. patent application number 09/698,104 filed October 30, 2000, U.S. patent application number 09/909,319 filed July 13, 2001 and U.S. patent application serial number 09/905,556 filed July 13, 2001.

The inventors found that a simple relationship exists between the subcell and the supercell:

$$k_1 v_1 + k_2 v_2 = u_1 \qquad\qquad 5(a)$$

$$k_3 v_1 + k_4 v_2 = u_2 \qquad\qquad 5(b)$$

where $k_1$, $k_2$, $k_3$ and $k_4$ are integers. Unfortunately, as of the time of the invention, equations 5(a) and 5(b) cannot be solved analytically. It is possible that, in the future, advanced computing and analytical resources may be developed that will enable an analytical solution to equations 5(a) and 5(b). Furthermore, equations 5(a) and 5(b) frequently do not have any solutions. Based on current analytical tools and computing power available, most solutions involve approximating $\mathbf{v_1}$ and $\mathbf{v_2}$. Thus for most practical applications, based on the current state of technology, a tolerance level is usually given as part of the design parameters.

For the supercell in Figures 3 and 4, the corresponding equations are:

$$u_1 = 5v_1 - 2v_2$$

and

$$u_2 = 2v_1 + 3v_2$$

Equations 5(a) and 5(b) can be converted into scalar equations:

$$m_1 = k_1 x_1 + k2 x_2 \qquad\qquad 6(a)$$

$$n_1 = k_1 y_1 + k_2 y_2 \qquad\qquad 6(b)$$

$$m_2 = k_3 x_1 + k_4 x_2 \qquad\qquad 6(c)$$

$$n_2 = k_3 y_1 + k_4 y_2 \qquad\qquad 6(d)$$

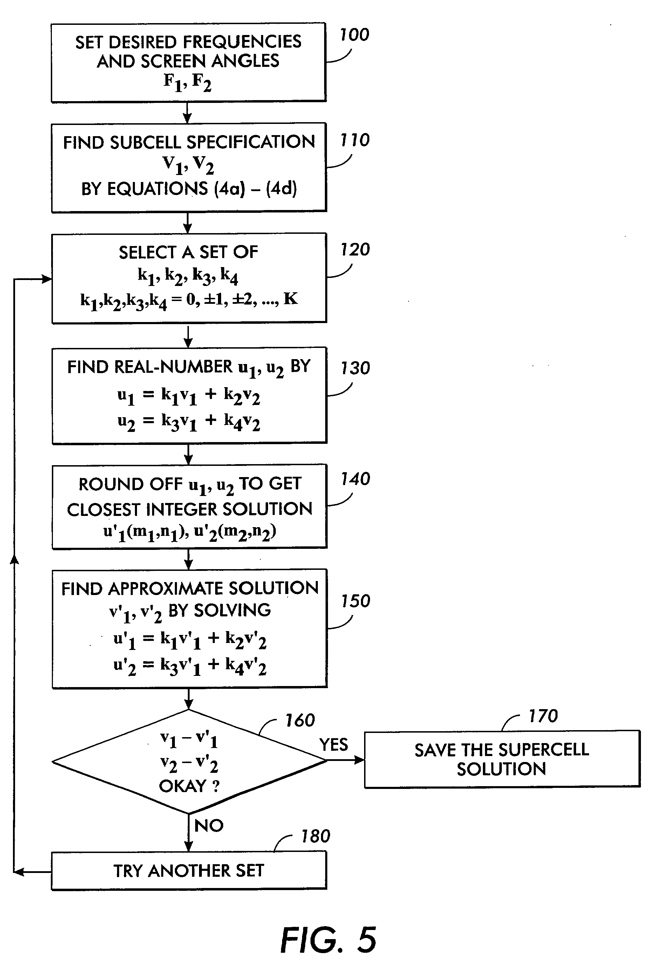

Referring to Figures 5, equations 5(a) and 5(b) can be (approximately) solved by a direct searching. Direct searching involves specifying values for certain parameters of the equations, then solving for the remaining parameters.

In step 100 desired frequencies and screen angles are specified by two frequency vectors, $\mathbf{F_1} = (f_{X1}, f_{Y1})$ and $\mathbf{F_2} = (f_{X2}, f_{Y2})$. The corresponding spatial specification by vectors $\mathbf{v_1}$ and $\mathbf{v_2}$ is obtained by solving Eqs. (4a) - (4d) in step 110.

In step 120 we select a set of integer values, $k_1$, $k_2$, $k_3$ and $k_4$, which will be incremented to the maximum value K, respectively. Note that $k_1$ to $k_4$ can be positive and negative integers and we loop through all possible $k_1$ to $k_4$ combinations. For a given set of $k_1$, $k_2$, $k_3$ and $k_4$, we calculate Eqs. (5a) and (5b) in step 130 to find the exactly desired supercell solution, $\mathbf{u_1}$ and $\mathbf{u_2}$, which in general are real-number specified. Next, in step 140, an approximate integer solution of the supercell is found by rounding off the real-number vectors, $\mathbf{u_1}$ and $\mathbf{u_2}$, to the closest integer

vectors, $\mathbf{u'}_1(m_1, n_1)$ and $\mathbf{u'}_2(m_2, n_2)$, where $m_1$, $n_1$, $m_2$ and $n_2$ are integers. To check if the approximate solution, $\mathbf{u'}_1$ and $\mathbf{u'}_2$, satisfies the tolerance requirement, in step 150, the corresponding subcell, $\mathbf{v'}_1$ and $\mathbf{v'}_2$ is calculated by solving Eqs. (5a) and (5b) with integer vectors $\mathbf{u'}_1$ and $\mathbf{u'}_2$. In step 160, the approximate solution $\mathbf{v'}_1$ and $\mathbf{v'}_2$ is compared with the desired subcell $\mathbf{v}_1$ and $\mathbf{v}_2$. If the difference is within the tolerance, the supercell solution, $\mathbf{u'}_1$ and $\mathbf{u'}_2$, is saved (step 170), otherwise, the searching loop continues with another set of integers, $k_1$, $k_2$, $k_3$ and $k_4$ (step 180).

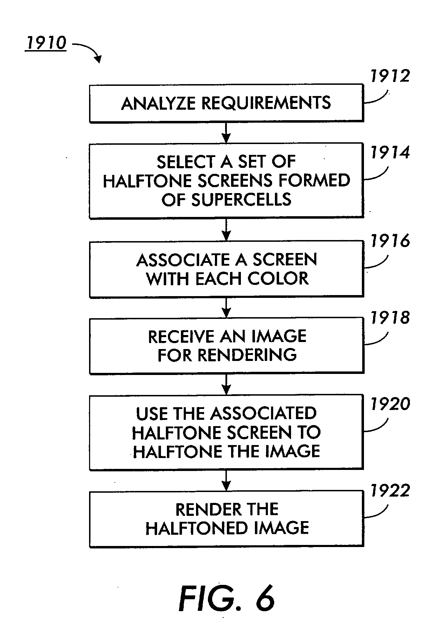

The foregoing generated supercells can be used in a halftone screen in a method of halftoning and rendering. Referring to Figure 6, in summary, a method 1910 of halftoning and rendering a color image, that solves a predetermined requirement, can begin with an analization step **1912**. In the analization step **1912** various requirements, such as process effects, characteristic of a target rendering device, particular image type requirements or other requirements, are considered. For example, process effects such as directions and frequency components of effects, such as, for example, development order effects, dual beam effects, photoreceptor velocity non-uniformity effects, mirror wobble effects, and/or raster start position jitter effects, may be determined.

In a screen set selection step **1914** a search is carried out to find a set of halftone screens having fundamental screen frequencies and screen angles. The search may be carried out using the method described with reference to Figures 5A - 5D in order to find a set of halftone screens formed of supercells.

Once a screen set has been selected, colorants or color separations are associated with individual screens from the selected set, in screen association step **1916.** When colorants have been associated with respective screens from the selected screen set, an image is received in a color image reception step **1918**. The image may be received from any image source. For example, the image may be received directly from an image authoring tool, via a computer network, from digital media, such as a magnetic or optical disk, or from the output of a document scanner. Whatever the source, the image is either in a raster format or a rasterized version is created through known rasterization processes. In the rasterization process or subsequent to the rasterization process, the image is separated into color planes related to the colorants previously associated with screens from the selected screen set.

In a rendering step **1920,** each color separation is halftoned through the halftone screen of the related colorant and rendered in a rendering step **1922**. The image is rendered through the use of a rendering device, such as, for example, a xerographic printer, a lithographic printer, an inkjet printer or other printer or display device. For example, the method is beneficially applied to at least some image-on-image xerographic printers and in many lithographic environments.

Referring to Figure 7, an exemplary image processor **2010** operative to carry out a method **1910** of halftoning and rendering a color image in accordance with a predetermined set of optimization parameters, includes a screen set repository **2014**, a halftoner **2018,** an image input device **2022,** a temporary image storage device **2026,** a long term or bulk storage device **2030**, general image processor components and functions **2034**, a rendering device **2038** and a screen set searcher **2042**.

The image input device **2022** can be any image data source. For example, the image input device **2022** can be a scanner, electronic media reader such as, a disk drive, cdrom drive, or computer communications network connection. Whatever the source, image data is stored in the temporary image storage device **2026**. The temporary image storage device **2026** is, for example, a computer memory.

The screen set repository **2014** includes a non-volatile memory device. The screen set repository **2014** stores and provides access to a selected set of halftone screens, such as, a set of screens selected in the screen set selection step **1914**. The selected screens are predetermined and loaded into the screen set repository. The screen set selection may be based on characteristics and idiosyncrasies of, for example, the print engine **2038** or the screen selection may be based on predetermined optimization requirements, such as image type. Alternatively the screen set may be selected in real time by the screen set searcher **2042**. The screen set searcher **2042** selects a screen set based, for example, on rendering preferences determined, by a processor operator or other expert or agent (not shown). Again, the selection may be based on the characteristics of the print engine **2038** or some other defined criteria. The halftoner **2018** reviews the image data in the temporary storage device **2026** and communicates with the selected screen set repository **2014** in order to compare the image data with threshold information stored in the selected screen set. The results of that comparison are passed, for example, to the general image processor functions **2034** and form the basis for the generation of control signals for operating the print engine **2038**. Alternatively, the results of the comparison are stored in the bulk storage device **2030** for later processing.

The general image processor functions **2034** are known in the art to include editing and image enhancement functions as well as print engine communication functions. The general image processor **2034** may modify the information delivered from the halftoner **2018** or simply pass it directly to the print engine **2038**.

The print engine can be any image-rendering device. In a xerographic environment, the print engine is a xerographic printer, such as an image-on-image xerographic printer. In a lithographic environment the print engine may be a lithographic printer, including, for example, printing plates etched through the use of the selected screen set. Xerographic printers are known to include a fuser, a developer and an imaging member or photoreceptor. Alternatively, the print engine **2038** may be another device, such as an electronic display or an inkjet printer.

Of course, image processors that are operative to carry out the method **1910** of halftoning can be implemented in a number of ways. In the exemplary image processor **2010**, halftoner **2018**, and the general document processor functions **2034** are implemented in software that is stored in a computer memory, and run on a microprocessor, digital signal processor or other computational device. Other components of the document processor are known in the art to include both hardware and software components. Obviously the functions of these modules can be distributed over other functional blocks and organized differently and still represent an embodiment of the invention.

**Claims**

1. A method of constructing a halftone screen comprising:

   defining a halftone screen frequency and screen angle according to a predetermined requirement;
   defining a desired subcell having the predetermined frequency and screen angle requirement, wherein the subcell is substantially specified by two spatial vectors $v_1 = (x_1, y_1)$ and $v_2 = (x_2, y_2)$, wherein $x_1$, $x_2$, $y_1$, and $y_2$ are real numbers;
   forming a supercell comprising an array of the subcells, wherein the supercell is substantially specified by two spatial vectors $u_1$ and $u_2$ and wherein the relationship between the supercell and the subcell satisfies:

   $$k_1 v_1 + k_2 v_2 = u_1,$$

   and

   $$k_3 v_1 + k_4 v_2 = u_2,$$

   where $k_1$, $k_2$, $k_3$ and $k_4$ are integer values.

2. The method of claim 1, further comprising:

   using particular integer values for $k_1$, $k_2$, $k_3$ and $k_4$ and $u'_1(m_1, n_1)$ and $u'_2(m_2, n_2)$, where $m_1$, $n_1$, $m_2$ and $n_2$ are integers to solve the supercell-subcell relationship for $v_1'$ and $v_2'$, where $v'_1$ and $v'_2$ are approximate solutions of the desired subcell $v_1$ and $v_2$; and
   comparing $v_1$ and $v_2$ with $v_1'$ and $v_2'$.

3. The method of claim 1 or claim 2, wherein the step of solving the supercell-subcell relationship comprises directly searching for solutions.

4. The method of any of claims 1 to 3, wherein a plurality of supercell solutions are determined and further comprising:

   applying a constraint to the determined solutions; and
   removing supercell solutions that do not satisfy the constraints.

5. The method of claim 4, further comprising selecting a supercell solution that satisfies the constraint and creating a halftone screen using the selected supercell.

6. A method of constructing a halftone screen comprising:

   selecting a frequency and screen angle of interest;
   identifying a subcell by spatial vectors which satisfies the selected frequency and screen angle of interest;
   forming a supercell comprising an array of the subcells, wherein an integer relationship exists between the supercell and the subcells;
   solving the integer relationship;
   testing one of any resulting solutions according to any additional constraints or tolerances; and
   if any of the resulting solutions satisfies the testing, creating a halftone screen using the tested solution.

7. A computer program product storing a program defining a method according to any of the preceding claims.

**FIG. 1**

FIG. 2

## FIG. 3

## FIG. 4

```
┌─────────────────────────────┐
│   SET DESIRED FREQUENCIES    │  100
│     AND SCREEN ANGLES        │
│          F₁, F₂              │
└─────────────────────────────┘
              │
              ▼
┌─────────────────────────────┐
│  FIND SUBCELL SPECIFICATION  │  110
│          V₁, V₂              │
│    BY EQUATIONS (4a) – (4d)  │
└─────────────────────────────┘
              │
              ▼
┌─────────────────────────────┐
│        SELECT A SET OF       │  120
│        k₁, k₂, k₃, k₄        │
│  k₁,k₂,k₃,k₄ = 0, ±1, ±2, ..., K │
└─────────────────────────────┘
              │
              ▼
┌─────────────────────────────┐
│  FIND REAL-NUMBER u₁, u₂ BY  │  130
│      u₁ = k₁v₁ + k₂v₂        │
│      u₂ = k₃v₁ + k₄v₂        │
└─────────────────────────────┘
              │
              ▼
┌─────────────────────────────┐
│    ROUND OFF u₁, u₂ TO GET   │  140
│   CLOSEST INTEGER SOLUTION   │
│     u'₁(m₁,n₁), u'₂(m₂,n₂)   │
└─────────────────────────────┘
              │
              ▼
┌─────────────────────────────┐
│   FIND APPROXIMATE SOLUTION  │  150
│       v'₁, v'₂ BY SOLVING    │
│      u'₁ = k₁v'₁ + k₂v'₂     │
│      u'₂ = k₃v'₁ + k₄v'₂     │
└─────────────────────────────┘
              │
              ▼
         ╱ v₁ – v'₁ ╲   160    ┌──────────────────┐  170
        ╱  v₂ – v'₂  ╲   YES   │  SAVE THE SUPERCELL │
        ╲   OKAY ?   ╱────────▶│      SOLUTION      │
         ╲         ╱            └──────────────────┘
             │ NO   180
             ▼
┌─────────────────────────────┐
│        TRY ANOTHER SET       │
└─────────────────────────────┘
```

100 — SET DESIRED FREQUENCIES AND SCREEN ANGLES $F_1, F_2$

110 — FIND SUBCELL SPECIFICATION $V_1, V_2$ BY EQUATIONS (4a) – (4d)

120 — SELECT A SET OF $k_1, k_2, k_3, k_4$
$k_1, k_2, k_3, k_4 = 0, \pm 1, \pm 2, ..., K$

130 — FIND REAL-NUMBER $u_1, u_2$ BY
$$u_1 = k_1 v_1 + k_2 v_2$$
$$u_2 = k_3 v_1 + k_4 v_2$$

140 — ROUND OFF $u_1, u_2$ TO GET CLOSEST INTEGER SOLUTION $u'_1(m_1, n_1), u'_2(m_2, n_2)$

150 — FIND APPROXIMATE SOLUTION $v'_1, v'_2$ BY SOLVING
$$u'_1 = k_1 v'_1 + k_2 v'_2$$
$$u'_2 = k_3 v'_1 + k_4 v'_2$$

160 — $v_1 - v'_1$ $v_2 - v'_2$ OKAY ?

170 — SAVE THE SUPERCELL SOLUTION

180 — TRY ANOTHER SET

## FIG. 5

_1910_

| 1912 |
| --- |
| ANALYZE REQUIREMENTS |

| 1914 |
| --- |
| SELECT A SET OF HALFTONE SCREENS FORMED OF SUPERCELLS |

| 1916 |
| --- |
| ASSOCIATE A SCREEN WITH EACH COLOR |

| 1918 |
| --- |
| RECEIVE AN IMAGE FOR RENDERING |

| 1920 |
| --- |
| USE THE ASSOCIATED HALFTONE SCREEN TO HALFTONE THE IMAGE |

| 1922 |
| --- |
| RENDER THE HALFTONED IMAGE |

*FIG. 6*

**FIG. 7**